# EUROPEAN PATENT APPLICATION

(11) **EP 3 238 948 A1**
(43) Date of publication of application: **01.11.2017**
(21) Application number: 16167435.3
(22) Date of filing: 28.04.2016
(51) Int. Cl.: B41M 5/26, G06F 17/30, G06Q 10/08

(54) **AUTHENTICATION SYSTEM AND ASSOCIATED OBJECT MARKING METHOD**

(71) Applicant: Valsigna GmbH, 6052 Hergiswil NW (CH)
(72) Inventor: Bertasius, Gintautas, 6968 Sonvico (CH); Kancerevycius, Gitanas, 6946 Ponte Capriasca (CH); Sakalys, Vydmantas, 08401 Vilnius (LT); Monkus, Valdas, 08411 Vilnius (LT); Petrauskas, Mindaugas, 08314 Vilnius (LT)
(74) Representative: Fiammenghi, Alessandro

(57) **Abstract**

An authentication system, said system comprising:
- a data processing unit (201) comprising code creating means, receiving a code creation command and electronically storing a unique identifier code in association to an object (300) to be authenticated;
- code transferring means (205, 206, 207), electronically connected to said code creating means; said code transferring means being suitable for mechanically associating said code to said object (300);
wherein said code transferring means (205, 206, 207) convert said unique identifier code to a graphic representation (200) thereof, and permanently mark and/or etch said object with said graphic representation of said code in a millimeter scale format; and wherein
said data processing unit (201) comprises input querying means providing electronic access to said unique identifier code stored and to a detail of said object (300) already stored in an electronic file associated to said unique identifier code.

## Description

### Field of the invention

The present invention refers to the field of electronic devices, and in detail concerns an authentication system.

The present invention further concerns a method for authenticating objects.

### Background art

Grey market is the trade of a commodity through distribution channels that are legal but unintended by the original manufacturer.

The scale of grey market, as well as counterfeiting and theft of products is extremely high and still growing.

Recently it has been estimated that counterfeits account for 6% to 8% of world trade with estimate variation 4% to 10% percent. 7% constitutes about $750 billion. Asia being the market that incurred more than one-third of the losses due to counterfeiting. Swiss watch industry alone takes 0,84 - 1,47 billion EUR losses per year due to counterfeiting.

It is estimated that legitimate industry loses approximately EUR 1.9 billion of revenue annually due to the presence of counterfeited jewelry and watches in the EU marketplace, corresponding to 13.5% of the sector's sales.

Legitimate industry of handbags and luggage loses approximately €1.6 billion of revenue annually due to the presence of counterfeit handbags and luggage in the EU marketplace, corresponding to 12.7% of the sector's sales. It is estimated that legitimate clothing, footwear and accessories industry loses approximately €26.3 billion of revenue annually due to the presence of counterfeit clothing, footwear and accessories in the EU marketplace, corresponding to 9.7% of the sector's sales.

International Chamber of Commerce in 2004 reported loss of $12 billion every year in luxury goods sector due to counterfeiting, despite the commendable efforts of luxury brand marketers. For example, a well-known watch manufacturer reported the presence of 40,000 copies of its watches compared to 50,000 originals that were produced by the original brand itself.

For contrasting the phenomenon of grey marketing of goods, tagging systems have been developed. Today's principal systems of tagging are associated to high value jewelry and watch industry products.

Today's tagging systems include the association or stamping of serial numbers, logos or other details that provide for a certification of origin of the good.

The applicant has noticed that those tagging systems are easy to falsify and therefore are not suitable for tracking and providing a certified origin of goods.

Especially when dealing with traditional 2D barcodes, those codes cannot be applied to small objects, and cannot be considered permanent a non-removable, since their simple covering with paint would permanent impede further readings.

A further solution concerning the tagging is to use RFID or similar radio tags. Nonetheless the Applicant has considered that radio signals relating to RFIDs can be received and duplicated quite simply. Therefore, as of today, RFID tags still represent a too easy replicable way of certificating an item.

A simple apposition of a serial number can provide for an actual certification only if that number is compared - manually - with a reference source sometimes only available to the producer. This lengthen the period verification for providing a certification of the origin of the product.

Especially when objects are bought or pass through borders, there is the need of a system for easily and rapidly providing a certification of objects.

A first scope of the present invention is therefore to provide an authentication system that solves the aforementioned drawbacks.

A second scope of the present invention is to disclose an authentication system that provides for solving the aforementioned drawbacks.

### Summary of the invention

For solving the previous drawbacks it is hereby disclosed an authentication system, said system comprising:
- a data processing unit comprising code creating means, receiving a code creation command and electronically storing a unique identifier code in association to an object to be authenticated;
- code transferring means, electronically connected to said code creating means; said code transferring means being suitable for mechanically associating said code to said object;
wherein said code transferring means convert said unique identifier code to a graphic representation thereof, and permanently mark and/or etch said object with said graphic representation of said code in a millimeter scale format; and wherein
said data processing unit comprises input querying means providing electronic access to said unique identifier code stored and to a detail of said object already stored in an electronic file associated to said unique identifier code.

The graphic representation is non-removable. The Applicant has found that with such a transfer no simple actions to replicate marking like painting an area or scratching can be done without high technology tools and that damaged or unreadable code would mean compromised on items authenticity; therefore the way and means of marking create significantly increased difficulty for counterfeiting the tagged item.

According to the present invention with the wording "millimeter scale" shall be meant a code whose overall dimension are in the magnitude order of some millimeters, preferably not exceeding 1mm and in particular not exceeding 0,5mm

According to a first aspect of the present invention, said code transferring means comprise an etching laser comprising at least one lens or focusing means suitable for adapting a laser beam produced by said etching laser to a micrometer-scaled size and preferably to a nanometer-scaled size.

The applicant has found that reducing the scale to such a measure allows the device according to the present invention to correctly mark the graphic representation of the code to a sufficiently high level of detail. In such a way, many graphic representations of the unique identifier code can be created, without losing any information and without necessitating an increase of the overall dimension of the graphic mark.

According to an aspect of the present invention, said system comprises a code transferring device, housing said code transferring means.

According to a further aspect of the present invention, said system further comprises an optional coating device, said coating device being operative on said object after said code transferring means; said coating device selectively accessing to at least an area of said object wherein said graphic representation is stored and coating said graphic representation of said code with a mechanically resilient transparent layer.

In detail, said coating device is a PVD device or an Oximaxuses Plasma Enhanced Chemical Vapor Deposition device, or a device performing Diamond-like carbon (DLC) ultrathin transparent coating.

According to the present invention it is further disclosed a method for authenticating an object, said method comprising:
- a step of definition of a unique identifier code for said object;
- a subsequent step of associating said unique identifier code to a graphic representation thereof in accordance to a predetermined algorithm of codification;
- a step of electronic transmitting said graphic representation of said unique identifier code to code transferring means; wherein
- said code transferring means upon the receipt of said graphic representation perform a permanent mechanical interaction with at least a predefined portion of said object for mechanically engraving or etching a superficial part thereof; and wherein
- said permanent mechanical interaction comprises reproducing said graphic representation of said unique identifier code to predefined portion of said object in a millimeter scale format; and
- a step of providing electronic access to said unique identifier code stored in a memory associated or of a data processing unit of an authentication system, wherein said unique identifier code is electronically associated to further details of said object stored in an electronic file associated to said unique identifier code.

According to an aspect of the present invention, said method further comprises a step of etching by means of a laser of at least a part of an outer surface of said object, wherein said laser is part of said code transferring means.

According to a further aspect of the present invention, said method further comprises a step of providing a reciprocal motion between said code transferring means and said object during said step of reproducing said graphic representation of said unique identifier code on at least one portion of said object.

According to a further aspect of the present invention, said method further comprises a step of activating conveying means moving said object to a coating station.

According to a further aspect of the present invention, said method further comprises an optional step of providing at least one transparent coating layer over said at least one part of the external surface of said object.

According to a further aspect of the present invention, said method further comprises a step of allowing remote accessing to said unique identifier code with further details of the object, wherein said step of allowing remote accessing comprises providing predetermined credentials of accessing/modification of at least one predetermined part of said file.

### Description of the figures

Further features of the system according to the present invention will be disclosed in one or more embodiments which are preferred and non-limiting, disclosed in association with the annexed figures wherein:
- figure 1 shows a flow-chart of the operation of the system according to the present invention;
- figure 2 discloses an operative scheme of the system according to the present invention; and
- figure 3 shows a schematic diagram of the operation of the system according to the present invention in terms of authentication.

### Detailed description of the invention.

With reference to the annexed figures, according to the present invention it is hereby disclosed an authentication system.

The system 100 according to the present invention comprises a data processing unit 201 with a memory 202 of a known type suitable for storing therein at least one file containing a unique identifier code for an object to be authenticated.

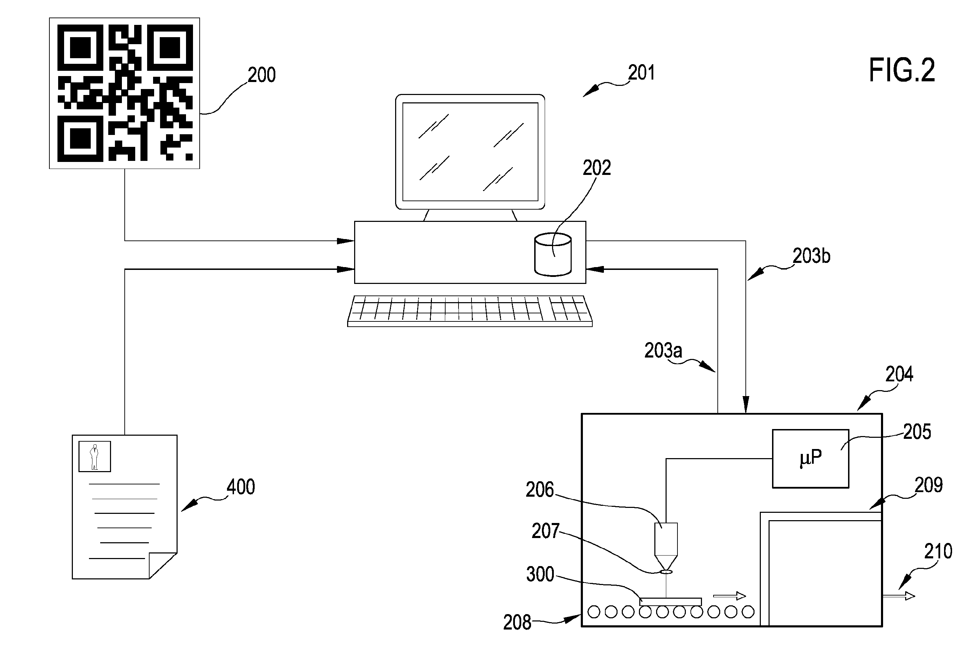

The data processing unit 201, that in figure 2 is schematically represented by a personal computer, comprises code creating means, receiving a code creation command from a user interface of a known type (as a non-limiting example, a keyboard or mouse or any combination thereof) which is connected to said personal computer in a known way.

Preferably said code creating means are of a software type, and are conceived for creating a code like a QR code 200 or any other graphic representation of a code which is useful for allowing the authentication of an object in a unique way, i.e. by means of any means of graphic representation of a unique identifier which are univocally associated to one and one single object.

The data processing unit 201 further comprises code transferring means, electronically associated and connected to said code creating means. In a preferred and non-limiting embodiment, said code transferring means are they too of a software type.

The code transferring means are conceived for letting the graphic representation 200 of a unique identifier code to be transferred on the object to be authenticated.
In detail the code transferring means operate in such a way to load from the memory 202 a unique identifier code that is created or anyway associated in a file to a reference identifier of an object, and then to create a graphic representation 200 of said unique identifier code by means of a predefined algorithm and then actuating a code transferring device 204 that is the apparatus of the system 100 according to the present invention that allows for the physical transfer of the graphic representation 200 of the unique identifier code to the object 300.

As shown in figure 2, the actuation of the code transferring device 204 takes place for example by means a bidirectional communication line 203a, 203b that can use an RS232 protocol or any other protocol of communication, either wired or wireless, suitable to be capable of permitting the control of a technical apparatus with servomechanisms.

The code transferring device 204 houses the code transferring means 205, 206, 207 that in a preferred and non-limiting embodiment comprise a microprocessor 205 electrically connected to an etching laser 206 providing a laser beam that is focused and reduced in diameter by focusing means 207 that preferably comprise a lens or a similar device.

The code transferring device 204 further comprises an housing for protecting the users against possible beam reflections and conveying means 208 suitable for allowing the motion of the object 300 during the transfer of the code.

In the code transferring device there is a reciprocal motion between the object 300 and at least part of the code transferring means 205, 206, 207. The reciprocal motion can take place either by means of a motion of the etching laser 207 of a beam redirection provided by the focusing means 207 or by means of a motion of the object 300 over the conveying means 208 performed by servo actuators on the conveying means themselves. This allows the beam of the etching laser etching a predefined zone of the object 300 with said graphic representation of the code 200.

According to one specific feature of the system according to the present invention, the graphic representation 200 of the code is transferred to the object in scale.

The Applicant has in fact found that traditional representations of the graphic representation of codes, independently of their shape or form, most of times are too big to be transferred on an object 300 without affecting the overall impression of the object itself.

The Applicant has found that micronizing the size of the graphic representation 200 of the code allows for having an object 300 whose aspect is substantially not affected by the engraving of the code.

Furthermore, adding a graphic representation 200 of a unique identifier code by means of a permanent mechanical interaction on the object 300, allows for a more stable and non-counterfeitable marking of the object 300, particularly when such a graphic representation is micronized, since any action of fraudulent adaptation of the representation would require specific and sophisticated devices difficult to acquire.

In a preferred and non-limiting embodiment, the code transferring means 205, 206, 207 provide for a millimeter scale graphic representation 200 of the unique identifier code. In particular the applicant points out that a typical marking can have perimeter sides with a length in the order of 500 micrometers. This implies that parts of the code can have a size of the magnitude order of some micrometers or less.
The code transferring device 204 further comprises an optional coating stage or coating device 209, preferably but in a non-limiting extent contained within the enclosure of the code transferring device, that provides for covering the area wherein the graphic representation 200 is transferred to said object 300 with a mechanically resilient transparent layer.

According to the present invention, with the wording "transparent layer" shall be intended any layer suitable to allow the reading, also by means of optical electronic means, of said graphic representation 200 of the object according to the present invention.

More in detail, with the wording "transparent" shall be meant any layer whose transparency is greater than 70% and preferably greater than 80% at least for radiation within the range 300-900 nm.

Preferably the coating device operates a Physical Vapor Deposition (PVD), which is a process that vaporizes a number of metals, and then binds them on a surface, in one or more superimposed layers, in an heated and vacuum environment. PVD processing typically allows for a transparency of 80 to 85% of the radiation in the range [450÷650]mn.

Alternatively, the coating device can operate with Plasma Enhanced Chemical Vapor Deposition (PECVD), which is a process used to deposit thin films from a gas state (vapor) to a solid state on a substrate. In PECVD, the plasma is generally created by RF (AC) frequency or DC discharge between two electrodes, the space between which is filled with the reacting gases and is used to enhance the chemical reaction rates of the precursors for achieving a more stable covering of the object 300. PECVD can produce coatings as thin as some nanometers, to over 100µm, with a very good mechanical resistance.

Further alternatively, the coating device can operate with DLC coating. The DLC coating, is a Diamond-Like Carbon coating that instead of spraying over the object 300 a group of metals, uses a form of carbon. Once the carbon is blasted onto the surface, it is cooled down extremely quickly, somewhat similar to how synthetic diamonds are made. The coatings demonstrated a high transparency, in the range [94÷97]% for radiations in the range [300÷900]nm.

The code transferring device 204 finally is provided with an aperture 210, eventually coinciding with the input aperture, for extracting the object 300 etched by the laser and further coated by the coating device 209.

The Applicant has found that coating the object 300 is very important for preventing the mechanical damage or wearing of the area subjected to etching by the laser. The significantly small size of the graphic representation 200 of the unique identifier code is such that also normal wearing can produce a relevant damaging of the representation, with the risk of rendering it non-readable or anyway damaged. Adding the coating, in particular where the mechanical protection thereof is very high, prevents damaging of the graphic representation 200 even in the case where the underlying material of the object 300 is not resistant.

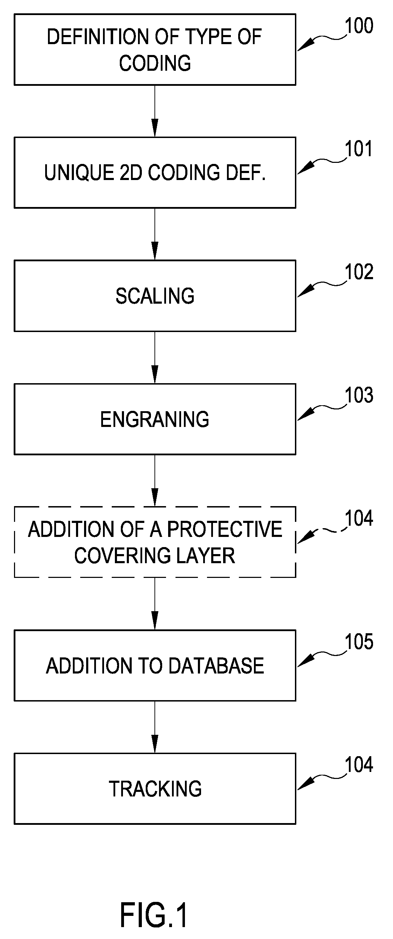

In use the system 100 according to the present invention operates as follows. The operation of the system 100 is disclosed with the help of the flow chart shown in figure 1.

In detail, at first the data processing unit 201 is programmed in order to select a particular representation of the unique identifier code that will be stored in the memory 202. This step of definition of type of coding is represented by block 100 in the flow chart.

The adaptation of the graphic representation 200 of the code allows for authenticating also objects whose shape is particular, e.g. very thin and long, with graphic representations that even if change their appearance they can be adapted to the shape of the object without losing the association with the unique identifier code.
The user then inputs to the system the command for generating a new code. The data processing unit 201, by means of a known means, generates a unique identifier code for example in the form of a sequence of random 0s and 1s in order to be suitable to be stored in a file. Such a sequence will be transformed in an image according to the particular representation previously selected.

The data processing unit 201 in this step of unique 2D coding definition, exploits known algorithms of random and unique number generations.

Then, in a subsequent step, according to the particular representation previously selected, the data processing unit 201 creates a sample of the graphic representation 200 of the unique identifier code that, in parallel, is stored in the memory 202 in a new file which will be associated univocally to the object 300. Let's suppose, for the purposes of disclosure of the present invention, that the shape of the graphic representation 200 of the code is a QR code.

The data processing unit 201 requires in order to complete the operation of electronic association of the object 300 to the unique identifier code, a further input of details of the object, for example a description and a photo, which are introduced by the user by means of user interface means connected to input querying means of a known type electronically interacting with said data processing unit 201. The further details are univocally associated with the unique identifier code stored in the new file.

Once the particular graphic representation 200 of the code is electronically defined, it is transferred to the code transferring device 204 by means of a transmission of a command through a transmission command line 203b that feeds data to the code transferring device 204.
The code transferring device performs a step of scaling (block 102) and engraving (block 103) of such a particular graphic representation 200 of the unique identifier code to the object.

In detail the user, through the data processing unit 201, can define with known means an area of the object 300 wherein he wants the graphic representation 200 to be transferred to, and this definition technically causes the actuation of servomechanisms of performing the reciprocal motion between the code transferring means and the object.

Once the zone is selected and electronically confirmed by the user to the data processing unit 201, a command of activation of the code transferring means 205, 206, 207 is sent through the bidirectional communication line 203a, 203b to the code transferring device, which starts to transfer the particular graphic representation 200 of the unique identifier code to the yet selected zone of the object. During this step of etching or engraving the outer surface of the object 300, there is an automated reciprocal motion between the object 300 and code transferring means 205, 206, 207.

Once the step of etching or engraving the outer surface of the object 300 is completed, the code transferring device 204 sends back a completion instruction to the data processing unit 204; this last provides means to the user for allowing the selection of optional coating of at least the area wherein the graphic representation 200 of the unique identifier code has been etched or engraved.

If the user proceeds with confirming the intention of proceeding with the coating (step corresponding to block 104), the code transferring device 204 actuates the conveying means 208 for moving the object 300 from the area of etching in correspondence of the etching laser 206 to the coating station or device 209.

The procedure of coating, with one of the processes previously disclosed, can take place with the addition of at least one or preferably more layers on the outer surface of the object 300.

Once more, when the step of coating 104 is ended, the user is electronically informed by the data processing unit 201, which received a command of coating completion from the coating device 209 through the bidirectional line 203a, 203b.

Once the process is completed the new file is permanently added to the database (block 105). In such a way, when third parties access to the data processing unit 201 through the querying means, the details of the object 300 are retrieved together with the unique identifier code in a process of tracking 106 that can be repeated many times in order to let those users (authorized service provider or item owner) eventually enlarge the image corresponding to the graphic representation 200 of the unique identifier code for further comparison. After the image is enlarged and presented, any standard 2D data image reader application can be used for conversion of optically readable 2D data code to unique string of alphanumeric characters, which is linked to the database of the memory 202.

More in general, and in addition to the details yet disclosed for the new file, the database containing all the files for the authenticated objects can be defined in further details according to the need of the owner of the system. The owner will be the final responsible for database development, maintenance and support, as well as its security. The input querying means will have means for allowing only eligible users access to the database, with preferably software limitation to read and/or modify only certain fields of the files or for inputting only certain types of data.

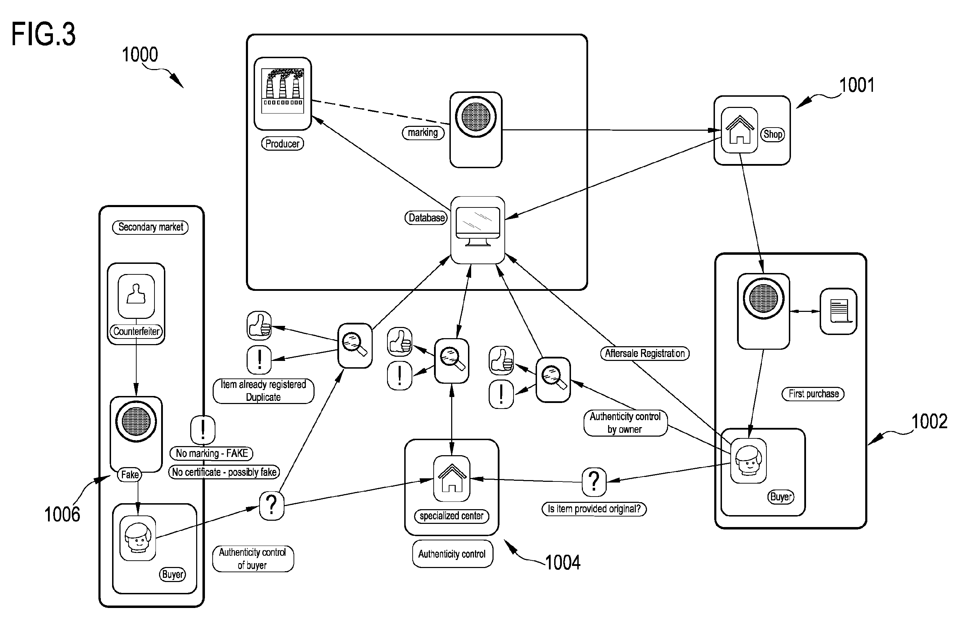

According to figure 3, in a first step (1000) a producer can certify an object by putting a compacted graphic representation of a logo thereon and associating to the object the certificate which can be represented on the computer and which is stored on the database.

The object can be delivered (block 1001) by means of traditional logistic couriers and then transmitted to the shop, which can verify the authenticity of the product by means of an electronic access to the database of the producer.

When the object is first purchased (block 1002) the buyer purchases the object as well as the certificate, whose authenticity can be confirmed by an electronic access 1003 to the database of the producer, electronic access that is performed preferably but in a non-limiting extent through a certificate of the producer.

As well specialized centers 1004 can check the authenticity of the object by comparing the certificate, with the microscopic mark on the object with the corresponding data of the database.

In case a counterfeiter in secondary market 1006 tries to produce a fake object, the buyer - through the process of verification of the authenticity 1005, can query the database of the producer or either the specialized center to match all the available data in order to confirm if the object is authentic or fake.

With the system herewith described, involves the participation of the marked item owner, and not only with a simple yes-no test. In particular, it shall be noted that since the future generation of users is increasingly searching for items where they can identify with - the so called process of consumer linking or customization - with the process according to the present invention there is the advantage of having a participation in the authorization process.

In particular, the database user interface that can be queried is used when the unique identifier code, for example being graphically represented as a QR code, is scanned and the use is routed to the database user interface; he can access thereto, and client level data defined by the producer is involved.

It is finally clear that to the system according to the present invention, further adaptations or addition can be made without departing from the scope of protection provided by the annexed claims.

## Claims

1. An authentication system, said system comprising:
- a data processing unit (201) comprising code creating means, receiving a code creation command and electronically storing a unique identifier code in association to an object (300) to be authenticated;
- code transferring means (205, 206, 207), electronically connected to said code creating means; said code transferring means being suitable for mechanically associating said code to said object (300);
wherein said code transferring means (205, 206, 207) convert said unique identifier code to a graphic representation (200) thereof, and permanently mark and/or etch said object with said graphic representation of said code in a millimeter scale format; and wherein
said data processing unit (201) comprises input querying means providing electronic access to said unique identifier code stored and to a detail of said object (300) already stored in an electronic file associated to said unique identifier code.

2. The authentication system according to claim 1, wherein said code transferring means (205, 206, 207) comprise an etching laser (206) comprising at least one lens or focusing means (207) suitable for adapting a laser beam produced by said etching laser to a micrometer-scaled size and preferably to a nanometer-scaled size.

3. The authentication system according to any one of claims 1 or 2, wherein said system comprises a code transferring device (204), housing said code transferring means.

4. The authentication system according to any one of claims 1-3 further comprising a coating device (209), said coating device (209) being operative on said object after said code transferring means; said coating device (209) selectively accessing to at least an area of said object (300) wherein said graphic representation is stored and coating said graphic representation of said code with a mechanically resilient transparent layer.

5. The authentication system according to claim 4, wherein said coating device is a PVD device or an Plasma Enhanced Chemical Vapor Deposition device, or a device performing Diamond-like carbon (DLC) ultrathin coating.

6. The authentication system according to claim 4, wherein said transparency is greater than 70%, preferably greater than 80% at least for radiation within the range 300-900nm.

7. The authentication system according to claim 2, wherein said laser performs a motion relative to said object (300).

8. A method for authenticating an object (300), said method comprising:
- a step of definition (100) of a unique identifier code for said object (300);
- a subsequent step of associating (101) said unique identifier code to a graphic representation (200) thereof in accordance to a predetermined algorithm of codification;
- a step of electronic transmitting said graphic representation (200) of said unique identifier code to code transferring means (205, 206, 207); wherein
- said code transferring means (205, 206, 207) upon the receipt of said graphic representation (200) perform a permanent mechanical interaction with at least a predefined portion of said object (200) for mechanically engraving or etching a superficial part thereof; and wherein
- said permanent mechanical interaction comprises reproducing said graphic representation (200) of said unique identifier code to predefined portion of said object (300) in a millimeter scale format; and
- a step of providing electronic access to said unique identifier code stored in a memory (200) associated or of a data processing unit (201) of an authentication system, wherein said unique identifier code is electronically associated to further details of said object (300) stored in an electronic file associated to said unique identifier code.

9. A method according to claim 8, further comprising a step of etching by means of a laser (206) of at least a part of an outer surface of said object (300), wherein said laser (206) is part of said code transferring means (205, 206, 207).

10. A method according to claim 8 or claim 9, comprising a step of providing a reciprocal motion between said code transferring means (205, 206, 207) and said object (300) during said step of reproducing said graphic representation (200) of said unique identifier code on at least one portion of said object (3009.

11. A method according to any one of claims 8-10, further comprising a step of activating conveying means (208) moving said object to a coating station (209).

12. A method according to any one of claims 8-11, further comprising a step of providing at least one transparent coating layer over said at least one part of the external surface of said object (300),

13. A method according to claim 12, wherein said at least one transparent coating layer is provided by means of a Chemical Vapour Deposition or a Plasma Enhanced Chemical Vapour Deposition or a Diamond-Like Carbon deposition.

14. A method according to claim 8, comprising a step of allowing remote accessing to said unique identifier code with further details (400) of the object (300), wherein said step of allowing remote accessing comprises providing predetermined credentials of accessing/modification of at least one predetermined part of said file.
